Europäisches Patentamt

European Patent Office

Office européen des brevets

(19)

(11) Publication number : **0 131 303**
**B1**

(12) **EUROPEAN PATENT SPECIFICATION**

(45) Date of publication of patent specification :
01.10.86

(51) Int. Cl.⁴ : **B 62 D 25/18**

(21) Application number : 84108029.4

(22) Date of filing : 09.07.84

(54) Anti-ice construction of movable fender portion in motor vehicle.

(30) Priority : 08.07.83 JP 106610/83 U

(43) Date of publication of application :
16.01.85 Bulletin 85/03

(45) Publication of the grant of the patent :
01.10.86 Bulletin 86/40

(84) Designated contracting states :
DE FR GB

(56) References cited :
US-A- 2 559 755
US-A- 4 153 290

(73) Proprietor : TOYOTA JIDOSHA KABUSHIKI KAISHA
1, Toyota-cho Toyota-shi
Aichi-ken 471 (JP)

(72) Inventor : Hamada, Eiichi
c/o TOYOTA JIDOSHA K.K. 1, Toyota-cho
Toyota-shi Aichi-ken (JP)
Inventor : Isetani, Hideki
c/o TOYOTA JIDOSHA K.K. 1, Toyota-cho
Toyota-shi Aichi-ken (JP)
Inventor : Kawamura, Toshio
c/o TOYOTA JIDOSHA K.K. 1, Toyota-cho
Toyota-shi Aichi-ken (JP)

(74) Representative : Tiedtke, Harro, Dipl.-Ing. et al
Patentanwaltsbüro Tiedtke-Bühling-Kinne- Grupe-
Pellmann-Grams-Struif Bavariaring 4 Postfach 20 24
03
D-8000 München 2 (DE)

## Description

This invention relates to an anti-ice construction of a movable fender portion in a motor vehicle with a side door hinge mechanism utilizing a quadric crank chain.

In most cases, the side door in a motor vehicle, e. g. passenger car has heretofore been installed in a manner to be rotatable about a hinge affixed to a vehicle body for opening or closing. In order to allow an occupant of the motor vehicle to open or close the side door for getting on or off the motor vehicle, a door opening angle corresponding to the total length of the side door is required. At this time, when a space at the side of the motor vehicle is small, there are many cases where it is difficult for the occupant to get on or off the vehicle because the side door cannot be opened sufficiently.

In contrast thereto, as has been seen in many literatures such for examples as U. S. Patents 3,275,370 and 3,095,600, there has been proposed a side door hinge mechanism formed by utilizing a quadric crank chain.

Furthermore, as proposed in EP-A-0 126 438, of which the date of filing is prior to the date of filing of the present application and which is published after that date, a side door hinge mechanism in a motor vehicle, wherein a quadric crank chain comprises : a front rotary link interconnecting two points which are disposed at the front side of a vehicle body and a side door as rotary shafts out of four points including two points disposed on the vehicle body and spaced apart from each other in the longitudinal direction of the vehicle body and two points disposed on the side door and spaced apart from each other in the longitudinal direction of the side door ; a rear rotary link interconnecting two points disposed at the rear sides as rotary shafts ; a portion between said two points on the vehicle body ; a portion between said two points on the side door ; said rotary shaft at the front side of the vehicle body is disposed forwardly of the rear end of a front fender and inwardly of said front fender ; and a portion of said front fender, which covers the outer surface of said front rotary link, divided from a main body of said front fender to be formed into a movable fender rotable with said front rotary link.

The side door hinge mechanism utilizing the above-described quadric crank chain can reduce an essential space at the side of the motor vehicle with a space at the feet of an occupant of the vehicle being secured. In consequence, even when the space at the side of the motor vehicle is small, the occupant can open or close the side door to get on or off the vehicle.

Now, in general, the front wheels splash up molten snow water, snow, ice and the like rearwardly during running in the cold northern district for example, whereby ice coating occurs in the movable fenders, thereby possibly making the movable fender unable to rock. In consequence, it is necessary to provide anti-ice devices formed by mudguards and the like in front of the rotary shafts on the vehicle body's side and the movable fenders in the foremost position.

Here, in general, the mudguard in a motor vehicle is affixed to a fender liner forming an inner peripheral wall of a wheel house in the rear of the front wheel and to a fender panel forming an outer side surface of the vehicle body in the rear of the front wheel. However, there is presented such a disadvantage that the mudguard cannot be affixed as before in a motor vehicle in which the fender panel is divided into two including the movable fender and fixed fender disposed upwardly of the movable fender as described above.

Further, in general, the fender liner is connected and affixed to the vehicle body's side and the fender panel's side. However, in the motor vehicle provided with the disadvantage that the fender liner cannot be affixed to the fender.

It is therefore, the object of this invention to provide an anti-ice construction of the movable fender portion in a motor vehicle, wherein the mudguard and the fender liner are firmly fixed to obtain a satisfactory mechanical strength.

To this end, the present invention contemplates that, in an anti-ice construction of a movable fender portion in a motor vehicle, wherein there is provided a side door hinge mechanism having a quadric crank chain comprising : a rotary link interconnecting two points disposed at the forward sides of a vehicle body and a front side door as rotary shafts out of four points including two points disposed on the vehicle body and spaced apart from each other in the longitudinal direction of the vehicle body and two points disposed on the front side door and spaced apart from each other in the longitudinal direction of the front side door ; a rotary link interconnecting two points disposed at the rear sides as rotary shafts ; a portion between the two points on the vehicle body ; and a portion between the two points on the front side door, and a fender portion covering the outer surface of at least a portion of one of the aforesaid rotary links formed into a movable fender rotatable about the rotary shaft on the vehicle body's side of the aforesaid one of the rotary links integrally with the aforesaid fender portion, wherein there are provided a fender liner forming an inner peripheral wall of a wheel house at least at the rear of the front wheel and extending from the vehicle body to the outer end position of the wheel house in the widthwise direction of the vehicle body in a manner such as not to interfere with the moving path of the forward end of the movable fender, and a mudguard connected at the forward end portion thereof to fender liner, connected at the top end portion thereof together with the bottom end of the upper fender upwardly of the movable fender to the vehicle body through a stay, and connected at the bottom end and the rear end portions thereof to the vehicle body through stays, respectively, and covering portions from the forward end portion of the movable fender at the time of full closing of the front side door to the outer end of the fender liner in the widthwise direction of the vehicle body.

To this end, the present invention contemplates that said mudguard comprises : a rear surface portion covering portions from an outer surface of a forward end edge of the movable fender at the time of full closing of the front side door, through a portion of an undersurface thereof, a portion of the bottom end portion of the upper fender and a forward end portion of the movable fender, to a rear end face of a wheel arch flare ; a rear surface portion extending along a rear surface of the wheel arch flare to cover the same ; an outer end face portion covering outer surfaces of the wheel arch flare and an outer end of the fender liner ; and a front face portion curved along the rear face of the front wheel to cover the same.

To this end, the present invention contemplates that the forward end portion of the mudguard is an inner edge portion of the front face portion in the widthwise direction of the vehicle body, the top end portion is a flange formed at the top ends of the rear face portion, the outer end face portion and the front face portion, the bottom end portion is a flange formed in a manner to be raised inwardly in the widthwise direction of the vehicle body and continuously along the bottom ends of the rear side surface portion, the rear face portion and the outer end face portion, and further, the rear end portion is a portion disposed at a position along the rear end edge portion of the rear side surface portion and rearwardly of the front end portion of the movable fender.

To this end, the present invention contemplates that a portion of the vehicle body supporting the upper end portion of said mudguard together with the bottom end of the upper fender through a stay is a front pillar.

To this end, the present invention contemplates that said fender liner may be utilized as interchangeable parts between two motor vehicle being of the same type and each provided with the movable fender or with a portion corresponding to said movable fender is integrally fixed to said upper fender.

Figure 1 is a perspective view showing an embodiment of an anti-ice construction in a motor vehicle according to the present invention ;

Figure 2 is an enlarged schematic sectional veiw taken along the line II-II in Fig. 1 ; and

Figure 3 is a disassembled perspective view enlargedly showing the essential portions of the above embodiment.

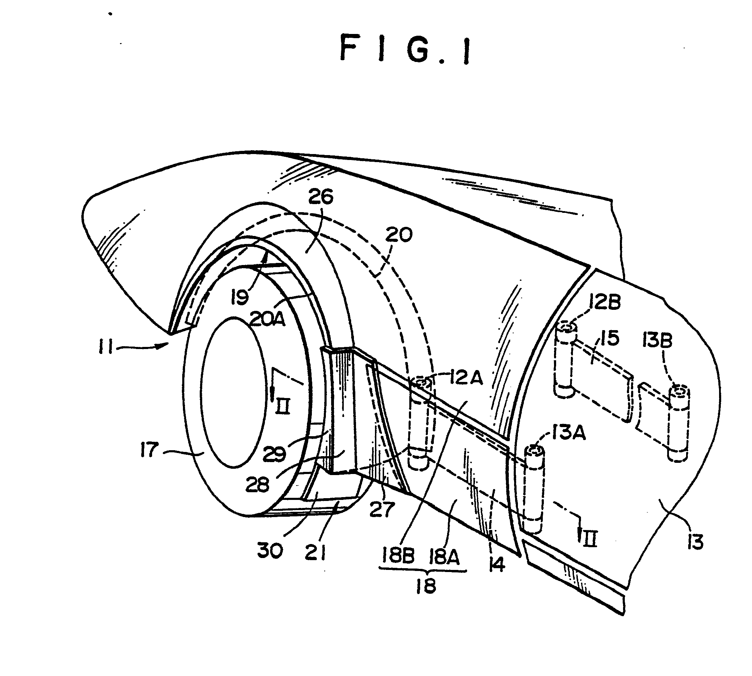

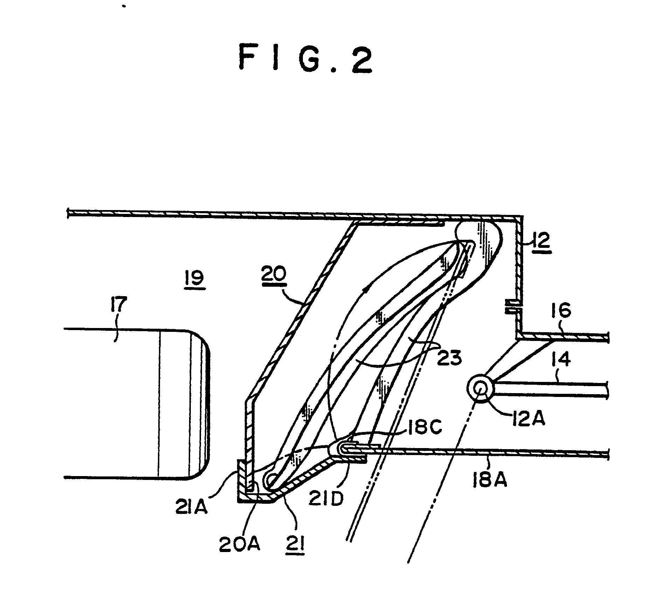

Description will hereunder be given of one embodiment of the present invention with reference to the drawings. As shown in Figs. 1 through 3, according to this embodiment, in an anti-ice construction of a movable fender portion in a motor vehicle 11, wherein there is provided a side door hinge mechanism having a quadric crank chain comprising : a rotary link 14 interconnecting two points disposed at the forward sides of a vehicle body 12 and a front side door 13 as rotary shafts 12A and 13A out of four points including two points disposed on the vehicle body 12 and spaced apart from each other in the longitudinal direction of the vehicle body 12 and two points disposed on the front side door 13 and spaced apart from each other in longitudinal direction of the front side door 13 ; a rotary link 15 interconnecting two points disposed at the rear sides as rotary shafts 12B and 13B ; a portion between the two points on the vehicle body 12 ; and a portion between the two points on the front side door 13, and a portion of a fender 18 covering the outer surface of one 14 of the rotary links is formed into a movable fender 18A rotatable about the rotary shaft 12A on the vehicle body's side of the one 14 of the rotary links integrally with the portion of the fender, there are provided a fender liner 20 forming an inner peripheral wall of a wheel house 19 at least in the rear of the front wheel 17 and extending from the vehicle body 12 to the outer end position of the wheel house 19 in the widthwise direction of the direction of the vehicle body 12 in a manner not to interfere with the moving path of the forward end of the movable fender 18A and a mudguard 21 connected at the forward end portion 21A thereof to the outer end portion 20A of the fender liner 20, connected at the top end portion 21B thereof together with the bottom end of the upper fender 18B upwardly of the movable fender 18A to the vehicle body 12 through a stay 22, and connected at the bottom end portion 21C and the rear end portion 21D thereof to the vehicle body 12 through stays 23 and 24, respectively, and covering portions from the forward end portion 18C of the movable fender 18A at the time of full closing of the front side door 13 to the outer end 20A of the fender liner 20 in the widthwise direction of the vehicle body 12.

More specifically, the mudguard 21 is connected to the upper fender 18B and the fender liner 20, and connected through the mudguard 21 itself, the upper fender 18B and the fender liner 20 to the vehicle body by use of stays to thereby increase the assembling rigidity. Further, the fender liner 20 is fixed through the mudguard 21 to the upper fender 18B and the vehicle body 12 in a manner not to interfere the movable fender 18A.

Here, a portion of the vehicle body 12 supporting the upper end portion 21B of the mudguard 21 together with the bottom end of the upper fender 18B through a stay 22 is a front pillar 16.

The mudguard 21 comprises : a rear surface portion 27 covering portions from an outer surface of a forward end edge of the movable fender 18A at the time of full closing of the front side door 13, through a portion of an undersurface thereof, a portion of the bottom end portion of the upper fender 18B and a forward end portion 18C of the movable fender 18A, to a rear end face of a wheel arch flare 26 ; a rear surface portion 28 extending along a rear surface of the wheel arch flare 26 to cover the same ; an outer end face portion 29 covering outer surfaces of the wheel arch flare 26 and an outer end 20A of the fender liner 20 ; and a front face portion 30 curved along the rear face of the front wheel 1 to cover the same.

The forward end portion 21A of the mudguard 21 is an inner edge portion of the front face portion 30 in the widthwise direction of the vehicle body, the top end portion 21B is a flange formed at the top ends of the rear face portion 28, the outer end face portion 29 and the front face portion 30, the bottom end portion 21C is a flange formed in a manner to be raised inwardly in the widthwise direction of the vehicle body and continuously along the bottom ends of the rear side surface portion 27, the rear face portion 28 and the outer end face portion 29, and further, the rear end portion 21D is a portion disposed at a position along the rear end edge portion of the rear side surface portion 27 and rearwardly of the front end portion 18C of the movable fender 18A.

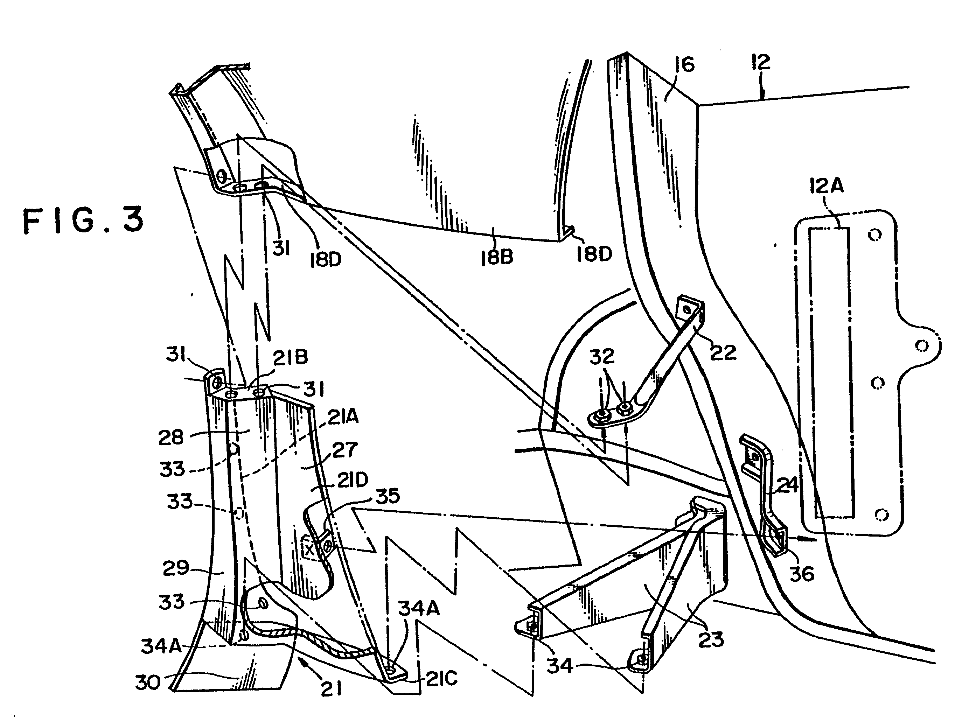

In Fig. 3, designated at 18D is a flange formed in a manner to be raised inwardly in the widthwise direction of the vehicle body and continuously along the bottom end and the front end of the upper fender 18B. This flange 18D is superposed onto the top end portion 21B as being the flange formed at the top end of the mudguard 21 to be fastened and fixed thereto through the threadable coupling between bolts, not shown, extending through bolt holes 31 and nuts 32 mounted at the forward ends of the saty 22.

In Fig. 3, denoted at 33 are bolt holes formed along the forward end portion 21A of the mudguard 21, which is fastended and fixed to the outer end 20A of the fender liner 20 by bolts, not shown, inserted through the aforesaid bolt holes 33.

The bottom end portion 21C of the mudguard 21 is fastened and fixed through bolts, not shown, to two nuts 34 secured to the forward ends of the stays 23 outwardly protruded in substantially V-shapes from the vehicle body 12 in the widthwise direction of the vehicle body and in correspondence to two bolt holes 34A spaced apart from each other in the longitudinal direction of the mudguard 21.

Further, the rear end portion 21D of the mudguard 21 has a bracket 35 secured to the substantially central portion in the vertical direction thereof. The bracket 35 is fastened and fixed to a bolt hole 36 at the forward end of the saty 24 laterally protruded from the front pillar 16 through a bolt and a nut, not shown.

In this embodiment, the mudguard 21 is fixed by the stays protruded and extended from the vehicle body and connected to the fender liner 20 as well as the upper fender 18B, whereby the anti-ice construction can be mounted under a high assembling rigidity without interfering with the movable fender 18A, so that the ice coating onto the movable fender 18A can be reliably avoided.

Moreover, in this embodiment, also the fender liner 20 together with the mudguard 21, can be reliably fixed to the vehicle body and the upper fender 18B without interfering with the movable fender 18A.

This embodiment is advantageous in that the fender liner 20 may be utilized as interchangeable parts between two motor vehicles being of the same type and each provided with the movable fender 18A or with a portion corresponding to the movable fender 18A, which is the same fixed fender as before, and moreover, the mudguard 21 and the like can be slightly modified to be utilized for the motor vehicles having any fender construction different from the above-described vehicle.

Additionally, in the above embodiment, the stay 22 for supporting the top end portion 21B of the mudguard 21 and the stay 24 for supporting the rear end portion 21D of the mudguard 21 are secured to the front pillar 16, respectively, however, the present invention need not necessarily be limited to this, and any stays 22 and 24 may be adopted only if they can be secured to the vehicle body.

Similarly, the stay 23 may be secured to the front pillar 16.

## Claims

1. An anti-ice construction of a movable fender portion in a motor vehicle (11), wherein there is provided a side door hinge mechanism having a quadric crank chain comprising : a rotary link (14) interconnecting two points disposed at the forward sides of a vehicle body (12) and a front side door (13) as rotary shafts (12A, 13A) out of four points including two points disposed on the vehicle body (12) and spaced apart from each other in the longitudinal direction of the vehicle body (12) and two points disposed on the front side door (13) and spaced apart from each other in the longitudinal direction of the front side door (13) ; a rotary link (15) interconnecting two points disposed at the rear sides as rotary shafts (12B, 13B) ; a portion between the two points on the vehicle body (12) ; and a portion between the two points on the front side door (13), and a fender (18) portion covering the outer surface of at least a portion of one (14) of said rotary links formed into a movable fender (18A) rotatable about the rotary shaft (12A) on the vehicle body's side of said one (14) of the rotary links integrally with said fender portion (18), wherein there are provided a fender liner (20) forming an inner peripheral wall of a wheel house (19) at least at the rear of the front wheel (17) and extending from the vehicle body (12) to the outer end position of the wheel house (19) in the widthwise direction of the vehicle body (12) in a manner such as not to interfere with the moving path of the forward end of the movable fender (18), and a mudguard (21) connected at the forward end portion (21A) thereof to fender liner (20), connected at the top end portion (21B) thereof together with the bottom end of the upper fender (18B) upwardly of the movable fender (18) to the vehicle body (12) through a stay (22), and connected at the bottom end and the rear end portions (21C, 21D) thereof to the vehicle body (12) through stays (23, 24), respectively, and covering the portions from the forward end portion (18C) of the movable fender (18A) at the time of full closing of the front side door (13) to the outer end (20A) of the fender liner (20) in the widthwise direction of the vehicle body (12).

2. An anti-ice construction of a movable fender portion in a motor vehicle, as set forth in claim 1, wherein said mudguard (21) comprises : a rear surface portion (27) covering portions from an outer surface of a forward end edge of the movable fender (18A) at the time of full closing of the front side door (13), through a portion of an undersurface thereof, a portion of the bottom end portion of the upper fender (18B) and a forward end portion (18C) of the movable fender (18A), to a rear end face of a wheel arch flare (27) ; a rear surface portion (28) extending along a rear surface of the wheel arch flare (26) to cover the same ; an outer end face portion (29) covering outer surfaces of the wheel arch flare (27) and an outer end (20A) of the fender liner (20) ; and a front face portion (30) curved along the rear face of the front wheel (17) to cover the same.

3. An anti-ice construction of a movable fender portion in a motor vehicle, as set forth in claim 2, wherein the forward end portion (21A) of the mudguard (21) is an inner edge portion of the front face portion (30) in the widthwise direction of the vehicle body (12), the top end portion (21B) is a flange formed at the top ends of the rear face portion (28), the outer end face portion (29) and the front face portion (30), the bottom end portion (21C) is a flange formed in a manner to be raised inwardly in the widthwise direction of the vehicle body (12) and continuously along the bottom ends of the rear side surface portion (27), the rear face portion (28) and the outer end face portion (29), and further, the rear end portion (21D) is a portion disposed at a position along the rear end edge portion of the rear side surface portion (27) and rearwardly of the front end portion (18C) of the movable fender (18A).

4. An anti-ice construction of a movable fender portion in a motor vehicle, as set forth in claim 1, 2 or 3, wherein a portion of the vehicle body (12) supporting the upper end portion (21B) of said mudguard (21) together with the bottom end of the upper fender (18B) through a stay is a front pillar (16).

5. An anti-ice construction of a movable fender portion in a motor vehicle, as set forth in claim 1, 2, 3 or 4, wherein said fender liner (20) may be utilized as interchangeable parts between two motor vehicle being of the same type and each provided with the movable fender (18A) or with a portion corresponding to said movable fender (18A) is intergrally fixed to said upper fender (18B).

**Patentansprüche**

1. Bauart einer Abdeckung zum Schutz gegen Vereisung eines beweglichen Kotflügelteils von einem Kraftfahrzeug (11), wobei ein Seitentür-Gelenkmechanismus, der eine Viergelenkkette mit : einem Drehglied (14), das zwei von vier als Drehwellen (12A, 13A) ausgebildete Punkte verbindet, die an den vorderen Seiten einer Fahrzeugkarosserie (12) und einer vorderen Seitentür (13) angeordnet sind, wobei zwei Punkte an der Fahrzeugkarosserie (12) angeordnet und in Längsrichtung der Fahrzeugkarosserie (12) voneinander beabstandet sind und zwei Punkte an der vorderen Seitentür (13) angeordnet und in Längsrichtung der vorderen Seitentür (13) voneinander beabstandet sind, einem Drehglied (15), das zwei als Drehwellen (12B, 13B) ausgebildete Punkte verbindet, die an den hinteren Seiten angeordnet sind, einem Abschnitt zwischen den zwei Punkten an der Fahrzeugkarosserie (12) und einem Abschnitt zwischen den zwei Punkten der vorderen Seitentür (13) aufweist, und ein Kotflügelteil (18) vorgesehen sind, das die äußere Oberfläche mindestens eines Abschnittes (14) der Drehglieder abdeckt und in einen beweglichen Kotflügel (18A) umgeformt ist, der um die Drehwelle (12A) auf der Seite der Fahrzeugkarosserie des einen (14) der Drehglieder, das einstückig mit dem Kotflügelteil (18) verbunden ist, drehbar ist, dadurch gekennzeichnet, daß eine Kotflügelverkleidung (20), die an einer inneren Umfangswand eines Radkastens (19) an zumindest dem hinteren Abschnitt des Vorderrades (17) ausgebildet ist und in der Weise von der Fahrzeugkarosserie (12) zu dem äußeren Endbereich des Radkastens (19) verläuft, daß sie den Bewegungsweg des vorderen Endes des beweglichen Kotflügels (18) nicht behindert, und ein Schutzblech (21) vorgesehen ist, das an seinem vorderen Endabschnitt (21A) mit der Kotflügelverkleidung (20), an seinem oberen Endabschnitt (21B) zusammen mit dem unteren Ende des oberen Kotflügels (18B) oberhalb des beweglichen Kotflügels (18) über eine Strebe (22) mit der Fahrzeugkarosserie (12) und an seinem unteren und an seinem hinteren Endabschnitt (21C, 21D) jeweils über Streben (23, 24) mit der Fahrzeugkarosserie (12) verbunden ist und die Abschnitte vom vorderen Endabschnitt (18C) des beweglichen Kotflügels (18A) bis zum äußeren Ende (20A) der Kotflügelverkleidung (20) in Querrichtung der Fahrzeugkarosserie (12) bei vollständig geschlossener vorderer Seitentür (13) abdeckt.

2. Bauart einer Abdeckung nach Anspruch 1, gekennzeichnet durch das Schutzblech (21) mit : einem hinteren Oberflächenabschnitt (27), der bei vollständig geschlossener vorderer Seitentür (13) Abschnitte von einer äußeren Oberfläche des vorderen Endrandes des beweglichen Kotflügels (18A), über einen Abschnitt von dessen unterer Oberfläche, einen Abschnitt des unteren Endabschnittes des oberen Kotflügels (18B) und einem vorderen Endabschnitt (18C) des beweglichen Kotflügels (18A) bis zu einer hinteren Endfläche einer Radbogenöffnung (27) abdeckt, einem hinteren Oberflächenabschnitt (28), der entlang einer hinteren Oberfläche der Radbogenöffnung (26) verläuft, um diese abzudecken, einem äußeren Endflächenabschnitt (29), der die äußeren Oberflächen der Radbogenöffnung (27) und ein äußeres Ende (20A) der Kotflügelverkleidung (20) abdeckt, und einem vorderen Flächenabschnitt (30), der entlang der hinteren Flächen des Vorderrades (17) gebogen ist und diese abdeckt.

3. Bauart einer Abdeckung nach Anspruch 2, dadurch gekennzeichnet, daß der vordere Endabschnitt (21A) des Schutzbleches (21) ein innerer Randabschnitt des vorderen Flächenabschnittes (30) in Querrichtung der Fahrzeugkarosserie (12) ist, daß der obere Endabschnitt (21B) ein Flansch ist, der an den oberen Enden des hinteren Flächenabschnitts (28), des äußeren Endflächenabschnittes (29) und des vorderen Flächenabschnittes (30) ausgebildet ist, daß der untere Endabschnitt (21C) ein Flansch ist, der in der Weise ausgebildet ist, daß er in Querrichtung der Fahrzeugkarosserie (12) nach innen und entlang den unteren Enden des hinteren Seitenoberflächenabschnittes (27), des hinteren Flächenabschnittes (28) und des äußeren Endflächenabschnittes (29) kontinuierlich ansteigt, und daß des weiteren der hintere Endabschnitt (21D) ein Abschnitt ist, der an einer Position entlang des hinteren Endrandabschnittes des hinteren Seitenoberflächenabschnittes (27) und rückwärtig von dem vorderen Endabschnitt (18C) des beweglichen Kotflügels (18A) angeordnet ist.

4. Bauart einer Abdeckung nach einem der Ansprüche 1 bis 3, dadurch gekennzeichnet, daß ein Abschnitt der Fahrzeugkarosserie (12), der den oberen Endabschnitt (21B) des Schutzbleches (21) zusammen mit dem unteren Ende des oberen Kotflügels (18B) über eine Strebe hält, ein vorderer Pfosten (16) ist.

5. Bauart einer Abdeckung nach einem der Ansprüche 1 bis 4, dadurch gekennzeichnet, daß die Kotflügelverkleidung (20) als auswechselbare Teile zwischen zwei Kraftfahrzeugen der gleichen Bauart verwendet werden kann, die jeweils mit dem beweglichen Kotflügel (18A) oder mit einem dem beweglichen Kotflügel (18A) entsprechenden Abschnitt versehen sind, und einstückig an dem oberen Kotflügel (18B) befestigt ist.

**Revendications**

1. Structure protectrice anti-glace d'une partie mobile de garde-boue d'un véhicule automobile (11) pourvu d'un mécanisme d'articulation à parallélogramme pour une portière latérale, qui comporte : un élément de liaison pivotant (14) reliant deux points situés sur les côtés avant d'une carrosserie de véhicule (12) et une portière latérale avant (13), lesquels points sont définis par des axes de pivotement (12A, 13A) et choisis parmi quatre points dont deux sont disposés sur le véhicule et espacés l'un de l'autre en direction longitudinale de la carrosserie du véhicule (12) et dont deux autres points sont disposés sur la portière latérale avant (13) et espacés l'un de l'autre en direction longitudinale de la portière latérale avant (13), un élément de liaison pivotant (15) reliant deux points disposés sur les côtés arrières et définis par des axes de pivotement (12B, 13B), une partie située entre les deux points de la carrosserie du véhicule (12), une partie située entre les deux points de la portière latérale avant (13) ; et un ensemble de composants de garde-boue (18) couvrant la surface extérieure d'au moins une partie d'un desdits éléments de liaison pivotants (14) et constituée par une partie de garde-boue mobile (18A) montée à pivotement autour de l'axe de pivotement (12A) sur le côté de la carrosserie du véhicule de l'un desdits éléments de liaison précité (14), solidarisé dudit ensemble de composants de garde-boue (18), cette structure protectrice comportant, en outre, un revêtement (20) de garde-boue qui forme une paroi intérieure périphérique d'un carter de roue (19) au moins à l'arrière de la roue avant (17) et qui s'étend à partir de la carrosserie du véhicule (12) vers la position terminale extérieure du carter de roue (19) dans la direction de la largeur de la carrosserie (12) du véhicule de façon à ne pas s'interposer sur le trajet du déplacement de l'extrémité avant de l'ensemble de composants de garde-boue (18) mobile, et un protecteur anti-boue (21) relié à sa partie terminale avant (21A) au revêtement (20) de garde-boue et relié à sa partie terminale supérieure (21B) avec l'extrémité inférieure du garde-boue supérieur (18B) au-dessus de l'ensemble de composants de garde-boue mobile (18) à la carrosserie (12) du véhicule par l'intermédiaire d'un support (22), tout en étant relié par son extrémité inférieure et ses parties terminales arrières (21C, 21D) à la carrosserie (12) du véhicule par l'intermédiaire de supports respectifs (23, 24) et en couvrant les parties à partir de la partie terminale avant (18C) du composant de garde-boue mobile (18A) lorsque la portière avant (13) est entièrement fermée, en direction de l'extémité extérieure (20A) du revêtement (20) de partie protectrice dans le sens de la largeur de la carrosserie du véhicule (12).

2. Structure protectrice anti-glace d'une partie mobile de garde-boue d'un véhicule automobile, telle que définie dans la revendication 1, dans laquelle ledit protecteur anti-boue (21) comporte : une partie de surface arrière (27) couvrant des parties à partir d'une surface extérieure d'un bord terminal avnt du composant de garde-boue mobile (18A) lorsque la portière latérale avant (13) est entièrement fermée, par l'intermédiaire d'une partie de sa surface inférieure, d'une partie de la partie terminale inférieure du composant de garde-boue supérieur (18B) et d'une partie terminale avant (18C) du composant de garde-boue mobile (18A), à une face terminale arrière d'un empattement incurvé (27) associé à la roue ; une partie de surface arrière (28) s'étendant le long d'une surface arrière de l'empattement incurvé précité (26) pour le couvrir ; une partie de face terminale extérieure (29) couvrant des surfaces extérieures de l'empattement incurvée précité (27) et une extrémité extérieure (20A) du revêtement (20) ; et une partie de face frontale (30) incurvée le long de la face arrière de la roue avant (17) pour couvrir celle-ci.

3. Structure protectrice anti-glace d'une partie mobile de garde-boue d'un véhicule automobile, telle que définie dans la revendication 2, dans laquelle la partie terminale avant (21A) du protecteur anti-boue (21) est formée d'une partie intérieure d'arête de la partie de face frontale (30) dans la direction de la largeur de la carrosserie du véhicule (12), la partie terminale supérieure (21B) étant une bride formée aux extrémités supérieures de la partie frontale arrière (28), cependant que les parties de face terminale extérieures (29) et frontale (30), ainsi que la partie terminale inférieure (21C) forment une bride formée, de manière à s'élever intérieurement dans la direction de la largeur de la carrosserie du véhicule (12) et de manière continue le long des extrémités inférieures de la partie de surfaces latérales arrières (27), la partie de surface arrière (28) et la partie de face terminale extérieure (29) et, de plus, la partie terminale arrière (21D) étant une partie disposée dans une position le long de la partie du bord terminal arrière de la partie de surface latérale arrière (27) et à l'arrière de la partie terminale avant (18C) du garde-boue mobile (18A).

4. Structure protectrice anti-glace d'une partie mobile de garde-boue de véhicule automobile, telle que définie dans une quelconque des revendications 1, 2 et 3, dans laquelle une partie de la carrosserie du véhicule (12) qui supporte la partie terminale supérieure (21B) dudit protecteur anti-boue (21) ensemble avec l'extrémité inférieure du garde-boue supérieur (18B) par l'intermédiaire d'un support est constitué par un pilier frontal (16).

5. Structure protectrice anti-glace d'une partie mobile de garde-boue de véhicule automobile, telle que définie dans l'une quelconque des revendications 1, 2, 3 et 4, dans laquelle ledit revêtement de garde-boue (20) peut être utilisé en tant que partie interchangeable entre deux véhicules automobiles de même type, chacun d'eux étant pourvu du garde-boue mobile (18A) ou d'une partie correspondant à ce garde-boue mobile (18A) attachée de manière solidaire audit garde-boue supérieur (18B).

# F I G . 1

# F I G . 2

FIG.3